# EUROPEAN PATENT SPECIFICATION

(11) **EP 2 309 163 B1**
(45) Date of publication and mention of the grant of the patent: **10.10.2012**
(21) Application number: 10169788.6
(22) Date of filing: 16.07.2010
(51) Int. Cl.: F16K 31/40

(54) **Bidirectional solenoid valve**
Bidirektionales Magnetventil
Electrovanne bidirectionnelle

(30) Priority: 08.10.2009 CN 200910204763
(43) Date of publication of application: 13.04.2011
(73) Proprietor: Zhejiang Sanhua Climate & Appliance Controls Group Co., Ltd., Zhejiang 312500 (CN)
(72) Inventor: Chen, Bin, Zhejiang Province 312500 (CN)
(74) Representative: Maiwald Patentanwalts GmbH

(56) References cited:
- EP-A1- 1 186 784
- EP-A2- 1 435 495
- WO-A1-2007/149229
- US-A- 2 470 470

## Description

### FIELD OF THE INVENTION

The present invention relates to a solenoid valve for refrigerant control used in apparatus, such as air conditioner, a chiller, etc., in particular to a two-way solenoid valve adapted to operate with the refrigerant flowing both forward and backward.

### BACKGROUND OF THE INVENTION

A two-way solenoid valve structure is disclosed in Japanese Patent Publication No. 6-101780. Reference is made to Fig.1, which is a structural schematic view of this patent. A cylindrical valve chamber 1a in communication with a first fluid passage 2a is divided into a main valve chamber 1d and a back pressure chamber 1c, with the inner diameter of the main valve chamber 1d being smaller than that of the back pressure chamber 1c. A piston-like main valve 3 is inserted into the main valve chamber 1d. The main valve chamber 1d has a main valve seat 1b disposed at the bottom thereof, in communication with a second fluid passage 2b and having an even smaller diameter. Within the main valve 3, a first leaking flow path 3b communicating the main valve chamber 1d and the back pressure chamber 1c and a second leaking flow path 3d communicating the second fluid passage 2b and the back pressure chamber 1c are provided. A flexible sealing plate 3i in contact with a section 1e between the main valve chamber 1d and the back pressure chamber 1c is mounted on a shoulder 3h of the main valve 3. Furthermore, an electromagnetic operated iron core 4 and a main valve spring 8 which drives the main valve 3 in a direction away from the main valve seat 1b are also provided. The electromagnetic operated iron core 4 has a valve stem support 5 which moves a first and a second non-return valve stems connected with openings at a back pressure chamber side of the first and second leaking flow paths simultaneously from the openings. Further, a guiding part that is inserted into a guiding hole provided on the main valve 3 is also provided. In the present solution, when the valve is to be closed, it is possible to prevent fluid in the back pressure chamber from leaking by applying a first pressure of controlled fluid to the back pressure chamber, because the flexible sealing plate is press-fitted with the shoulder of the main valve and with the section while the main valve is press-fitted into the main valve seat.
However, the following disadvantages exist in the prior art described above,
1. The travel distance of the iron core 4 of the two-way solenoid valve is long,
2. A guiding member is additionally provided between the piston-like main valve and the valve stem support, which results in a higher requirement for manufacturing precision and makes the structure of the solenoid valve more complex.

EP 1 186 784 A1 relates to a bidirectional pilot operated control valve, which is adapted to control a bidirectional flow of fluid between two ports. A main poppet selectively controls flow of fluid between the ports in response to pressure in a control chamber on one side of the main poppet. A pilot passage in the main poppet extends between the second port and the control chamber. A first pair of check valves allows fluid to flow only into the pilot passage from the two ports. A second pair of check valves allows fluid to flow only into the control chamber from the two ports.

EP 1 435 495 A2 relates to a switching valve with a first valve disposed between an inlet port and a first outlet port. A pilot valve is provided between a back pressure chamber for a movable plug that holds a valve sheet opposed to a valve seat and the first outlet port. The first valve is pilot operated by a solenoid.

WO2007/149229 A1 relates to as fluid-controlled valve capable of bidirectional operation including a housing with a first port and a second port. The valve also includes a first valve member operable to meter fluid flow between the first port and the second port. Additionally, the valve includes valve controls operable to control the position of the first valve member with fluid supplied to a control chamber. The valve controls include a pilot poppet operable to meter fluid flow from the control chamber and a spring compressed between the first valve member and the pilot poppet.

### SUMMARY OF THE INVENTION

The technical problem to be solved and technical task proposed by the present invention is to provide a new solution of two-way solenoid valve to overcome the disadvantages existed in the prior art, i.e., long travel distance of the iron core, as well as high requirement for manufacturing precision and complicated structure. For this reason, the following technical solution is adopted by the present invention:

A two-way solenoid valve including a valve body part and a coil provided outside the valve body part, characterized in that, the valve body part includes an upper valve body part and a lower valve body part, the upper valve body part acts as a valve guiding part in the two-way solenoid valve.

The upper valve body part includes an upper valve body member, a sleeve, a movable core and a static core which are arranged within the sleeve, and a return spring which is provided between the movable core and the static core.

The upper valve body member includes an upper valve seat and a valve seat boss, and has a hollow structure which defines an inner chamber having at least a pair of planes parallel to each other.

A pair of upper valve seat chambers is provided symmetrically inside the upper valve seat, and fluid passages between the inner chamber and the upper valve seat chambers are opened at the planes.

According to one embodiment of the invention the upper valve body part and the lower valve body part are hermetically fixed to each other, variable flow control parts are provided within the upper valve seat chambers, and the variable flow control parts adapts to block the fluid passages under the action of springs arranged within the upper valve seat chambers.

Alternatively, the upper valve body part and the lower valve body part are connected through a connecting tube, and the variable flow control part is disposed within the connecting tube.

Preferably, the variable flow control part is further provided with a flow path having a smaller inner diameter, which allows a small part of fluid to enter the upper valve seat chamber along the flow path when the variable flow control part blocks the fluid passage.

Preferably, the lower valve body part is provided with two openings leading to a chamber, and two connecting tubes are respectively connected to the openings, and wherein the openings are communicated with the pair of upper valve seat chambers within the valve guiding part respectively through a connecting passage provided within the lower valve body part.

Preferably, an end of the movable core which is farther from the static core is provided with a radial hole, a pair of sealing plugs is provided symmetrically in the radial hole, and a spring is provided between the sealing plugs; and wherein the fluid passages are respectively blocked by the pair of sealing plugs when the movable core is moved downward to a limit position.

Preferably, the two-way solenoid valve further comprises a piston part provided in the chamber and having a hollow structure, and a spring is provided within the piston part, with one end of the spring abutting against an inner portion of the piston part while the other end thereof abutting against an end surface of the upper valve body part.

Preferably, the lower valve body part comprises a valve seat, the valve seat is provided with a valve port, a gasket for sealing the valve port is arranged at an end of the piston part.

In the two-way solenoid valve of the present invention, through arrangement and design of the valve guiding structure, as well as arrangement of the variable diameter member, the disadvantages of long travel distance of the iron core, high requirements for manufacturing precision and complex structure existed in the prior art may be overcome, furthermore, the variable diameter member may have various structures and be arranged within the solenoid valve or within pipelines of the system freely, and thus is convenient and flexible.

### BRIEF DESCRIPTION OF THE DRAWINGS

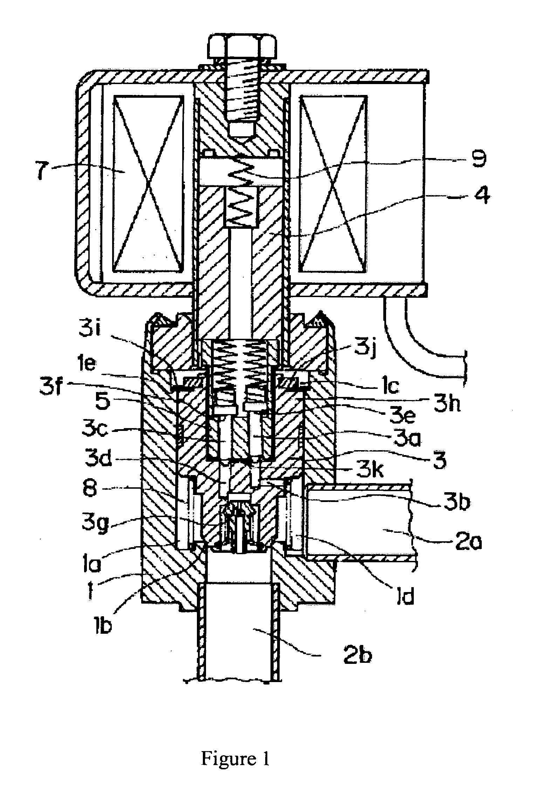

Figure 1 is a structural schematic view of a two-way solenoid valve of the prior art;

Figure 2 is a structural schematic view of the two-way solenoid valve of the present invention in closed state;

Figure 3a is a partial enlarged view of a portion I in Figure 2;

Figure 3b is a partial enlarged view of a portion II in Figure 2;

Figure 4 is a structural schematic view of the two-way solenoid valve of the present invention in open state.

### DETAILED DESCRIPTION OF THE INVENTION

Hereinafter, embodiments of the present invention will be described in detail with reference to the drawings.

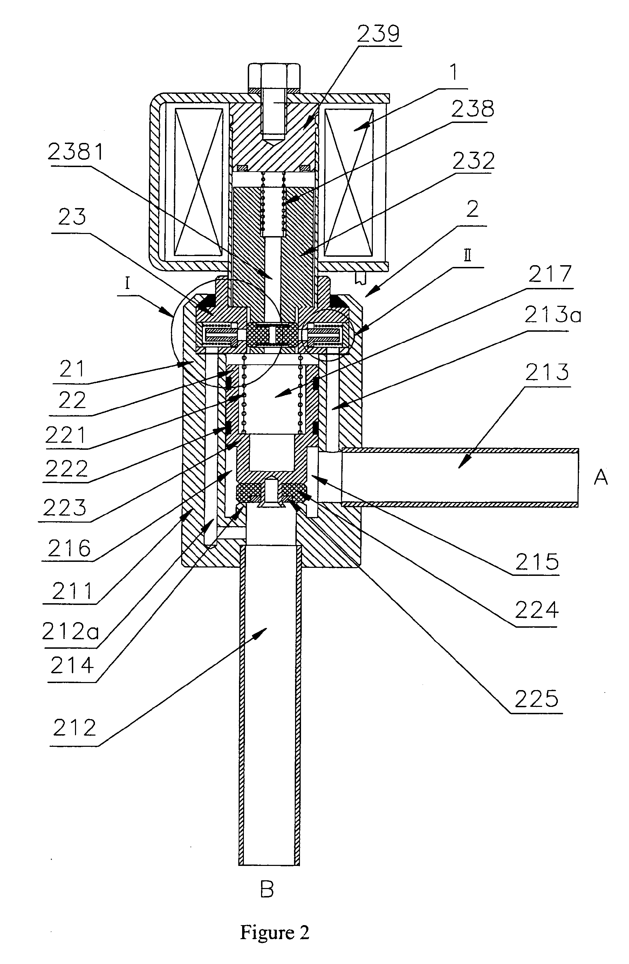

Figure 2 is a structural schematic view of the two-way solenoid valve of the present invention in closed state. As shown in the Figure, the solenoid valve includes a valve body part 2 and a coil part 1 fixed to the valve body part 2 with screws. The valve body part 2 includes an upper valve body part 23 and a lower valve body part 21. The lower valve body part 21 includes a first connecting tube 213, a second connecting tube 212 and a valve seat 211 respectively communicated with the both. The valve seat 211 has a valve port 214. The lower valve body part 21 is generally of a cylindrical shape with the valve port 214 being disposed at a lower end thereof. The second connecting tube 212 is connected at the bottom of the lower valve body part 21 and is communicated with the valve port 214. The inner portion of the lower valve body part 21 is of a hollow shape and thus forms a chamber 215 connected with both first and second connecting tubes 213 and 212. Inside the chamber 215, a piston part 22 in a stepped shape as a whole is provided with the outer circumferential surface thereof being contacted with the inner wall of the chamber 215. To improve sealing therebetween, an annular groove may be provided in the outer circumferential surface of the piston part 22, and a seal 222 may be provided in the groove. The inner portion of the Piston part 22 is of a hollow shape and has a step. A piston spring 221 is provided on the step to abut against the step of the inner chamber of the piston at one end and against the valve body at the other end. The Piston part 22 closes the valve port 214 under the gravity and an initial spring force of the piston spring 221.

To ensure sealing between the piston part 22 and the valve port 214, in this embodiment, a head portion of the piston part 22 is provided with a gasket 224 for sealing by contacting with the valve port 214. Specifically, a boss may be provided at a sealing end of the piston part 22, and then the gasket 224 may be ringed over the boss. To secure the gasket 224, a lock washer 225 may further be provided, and then the boss is flared for fixing.

Since the piston part 22 is provided inside the chamber 215, the chamber 215 is divided into an upper chamber 217 and a lower chamber 216. Apparently, the lower chamber 216 is in constant communication with the first connecting tube 213, and is also communicated with the second connecting tube 212 when the piston part 22 is moved from the end with the valve port.

The upper valve body part 23 is constituted by a sleeve 2312 and an upper valve body member together with a static core 239 and a movable core 232. The upper valve body member includes an upper valve seat 2310 and a valve seat boss 2311.

The outer diameter of the upper valve seat 2310 is greater than that of the valve seat boss 2311, so as to form a step shaped structure. The Upper valve seat 2310 is inserted and connected to the upper end of the lower valve body 22, with the both are hermetically fixed. In the embodiment, after being placed into the upper end of the valve body 22, the upper valve body part 23 is fixed through press-fitting an end of the lower valve body 22 at a portion located at the step portion formed between the upper valve seat 2310 and the valve seat boss 2311 and then welding.

The central portion of the valve seat boss 2311 is opened with a circular through hole, and the central portion of the upper valve seat 2310 is opened with a through hole having at least one pair of symmetric planes, such as a rectangular hole. However, the section of the through hole may also be shaped in a combination of rectangle and circle and is not limited to any specific form. The distance between the symmetric planes is smaller than the inner diameter of the upper valve seat 2310.

The upper valve seat 2310 is symmetrically opened with a pair of upper valve chambers 2313a/2313b, on which fluid passages 2314/2315 in communication with the through hole at the central portion of the upper valve member are opened. The pair of upper valve chambers 2313a/2313b is respectively provided with a variable flow control part 235a/235b therewithin. A small passage 2351/2352 is opened at the central portion of the variable flow control part 235a/235b, such that when the variable flow control part 235a/235b is abutted against the fluid passage 2314/2315, a portion of the flow is still allowed to flow into the upper valve chambers 2313a/2313b.

The variable flow control part 235a/235b is T-shaped in section with the outer diameter of its larger diameter end being sized in accommodating with the inner diameter of the upper valve chamber 2313a/2313b, so as to ensure that the variable flow control part 235a/235b may not tremble when moving left and right within the upper valve chambers 2313a/2313b and thus to avoid noise. In the embodiment, the larger diameter end is provided with a passageway substantially larger than the small passage 2351/2352, such that a majority of the fluid enters into the upper valve chambers 2313a/2313b along the passageway provided at the larger diameter end when the variable flow control part 235a/235b is moved toward a direction away from the fluid passage 2314/2315.

The open end of the upper valve chamber 2313a/2313b is provided with a head 237a/237b, and springs 236a/236b are provided between the heads 237a/237b and the variable flow control parts 235a/235b. The larger diameter end of the variable flow control part 235a/235b is pressed against the opening of the fluid passage 2314/2315 by the spring force.

The Variable flow control parts and the springs, the heads, and the valve seats having symmetric planes constitute a valve guiding part together.

The sleeve 2312 is positioned in the inner chamber of the upper valve seat 2310, and the outer diameter thereof mates with the inner diameter of the latter. The both are hermetically fixed. An end of the sleeve 2312 is pressed against a step surface formed between the upper valve seat 2310 and the valve seat boss 2311.

The static core 239 is hermetically fixed at one end of the sleeve 2312 away from the valve seat, and the movable core 232 is provided in the inner chamber formed by the sleeve 2312 and the valve body part 2 together. A movable core spring 238 is provided between the movable core 232 and the static core 239. The outer diameter of the movable core 232 mates with the inner diameter of the sleeve 2312, and is movable upward and downward within the sleeve 2312. One end of the movable core 232 adjacent to the valve port is shaped into a step, which fits with the step formed between the upper valve seat 2310 and the valve seat boss 2311. In the embodiment, a smaller diameter boss section at an end of the movable core has a outer diameter slightly less than the inner diameter of the upper valve seat 2310 and a length configured such that an end surface of the boss section is flush with an end surface of the upper valve seat 2310 when the movable core 232 is moved downward to a limit position. In addition, the movable core 232 is provided with one axial through hole 2381, which is communicated with the upper chamber 217.

The smaller diameter boss section of the movable core 232 is provided with a through hole in a radial direction, within which a pair of sealing plugs 234a/234b is arranged. The sealing plugs 234a/234b are T-shaped in section, with the end surfaces of their larger diameter ends being flat surfaces to respectively fit with a pair of rectangular planes at the central portion of the upper valve seat 2310. Between the sealing plugs 234a and 234b, a sealing plug spring 233 is provided. Both of the larger diameter ends of the sealing plugs 234a and 234b are pressed against and thus seal the openings of the fluid passages 2314/2315 under spring force.

Connecting passages 212a/212b are further provided within the lower valve body 211, wherein the connecting passage 212a communicates the second connecting tube 212 with the upper valve chamber 2313a in the upper valve seat 2310, and the connecting passage 212b communicates the first connecting tube 213 with the upper valve chamber 2313b on the other end.

It should be noted that orientation words, such as "upper", "lower" and the like, referred in the description of above embodiments are all with respect to the accompanied drawings and are not limited thereto actually.

Other embodiments

The other embodiments are partial modifications made to the above embodiments, most of which are embodied on structural design of the movable core part and the variable flow control part.

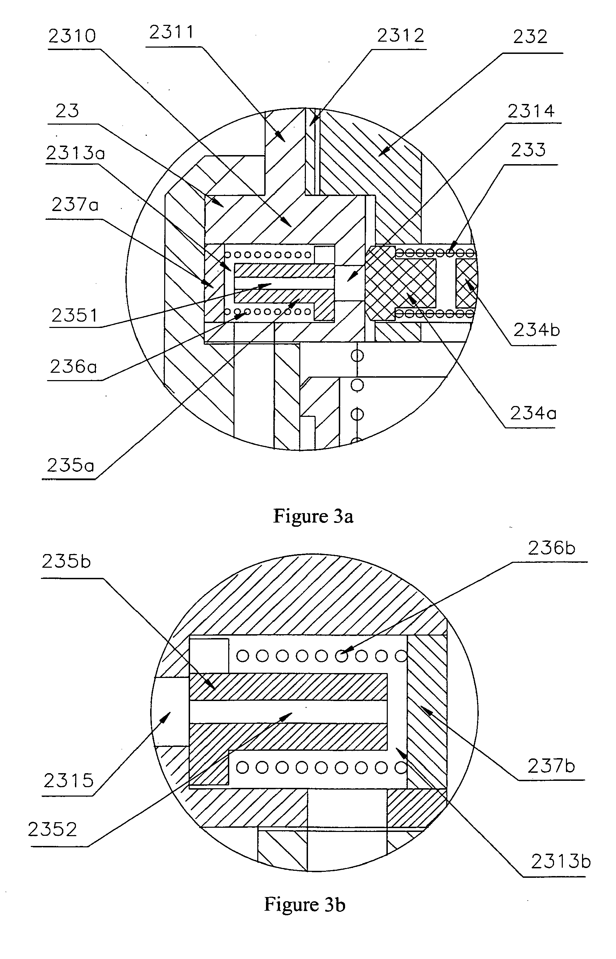

In the embodiment described above, one end of the movable iron adjacent to the valve port is provided to be a boss structure. This structure may be an integrally formed structure or a structure in a form of a combination from two parts. For example, a member connected with the movable core part is firstly manufactured to have a radial hole for receiving the sealing plug disposed in a radial direction of the member; and then this member is fixedly connected with the movable core by way of welding, etc.. The sealing plug 234a/234b is shown in Figs. 3a/3b as two sealing plugs with a sealing plug spring 233 disposed therebetween, however, they may also be provided as a single column-like sealing plug.

The variable flow control part may be positioned flexibly. It may be positioned inside the upper valve body as in the above embodiment, or be positioned inside the lower valve body. In addition, it may be positioned directly in pipelines. Positioning in pipelines has advantages to simplify the manufacture of the valve body, reduce volume and material cost and allow for flexible arrangement according to practical needs.

Hereinafter, the operating principle of the two-way solenoid valve is introduced according to the embodiment of the present invention.

For easy illustration, the port of the first connecting tube 213 is set as port A, and the port of the second connecting tube 212 is set as port B.

### (I) close from A to B

The coil part 1 is not energized, and the movable core 232 is moved downward to a limit position under the action of the movable core spring 238. Sealing surfaces of the sealing plugs 234a/234b is respectively pressed against the openings of the fluid passages 2314/2315 at both sides under the action of the spring 233, and thus the fluid passages 2314/2315 are closed. At this time, high pressure fluid is introduced from the first connecting tube 213 into the chamber 215, and into the upper valve chamber 2313b through the fluid passage 213a, and then into the fluid passage 2315 via the small passage 2352 at the center of the variable flow control part 235b, and pushes the sealing plug 234b to compress the spring 233 and thus to move toward left. Therefore, the high pressure fluid flows into the upper chamber 217 through a gap between the inner chamber of the upper valve seat 2310 and the smaller diameter section of the movable core 232. At this time, the chamber above the piston part 22 is in a high pressure, and the chamber therebelow (i.e., the end of the first connecting tube 212) is in a low pressure. Thus, the valve port 214 is closed under the action of the pressure difference, the two-way solenoid valve is then in a closed state.

### (II) open valve from A to B in a closed state

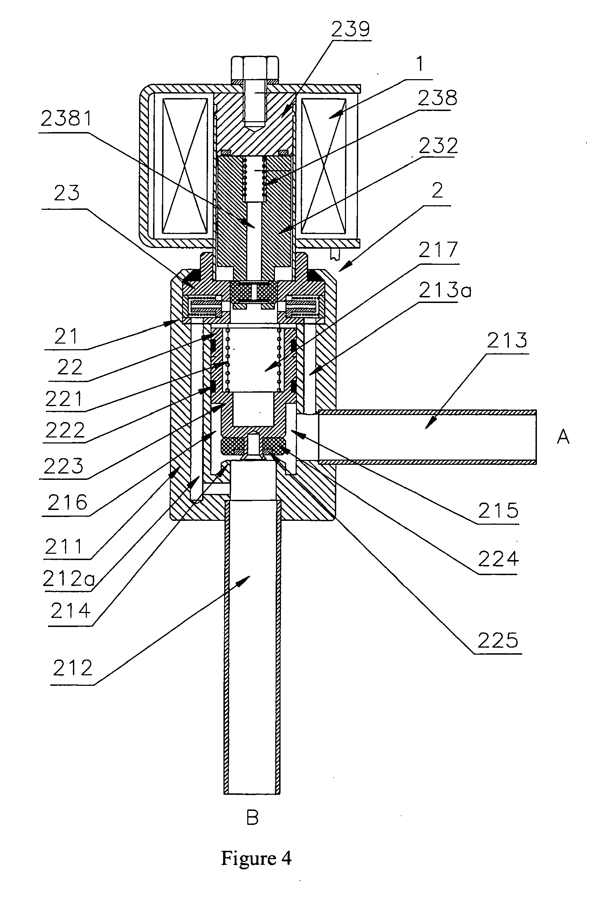

Reference is made to Figure 4, which is a structural schematic view of the two-way solenoid valve of the present invention in open state.

The coil part 1 is energized, and the movable core 232 is moved upward and is attracted to the static core 239 by electromagnetic force. The sealing plugs 234a/234b are moved upward with the movable core 232, and thus the fluid passages 2314/2315 are opened. High pressure fluid is introduced from the first connecting tube 213 into the chamber 215, and into the upper valve chamber 2313b through the fluid passage 213a, and then into the fluid passage 2315 via the small passage 2352 at the center of the variable flow control part 235b. At this time, due to the fact that the sealing plugs 234a/234b is moved upward with the movable core 232, the fluid enters the upper chamber 217 directly and then enters the fluid passage 2314. A small part of the high pressure fluid enters the upper valve chamber 2313a through the small passage 2351 at the center of the variable flow control part 235a, but most of the high pressure fluid pushes the variable flow control part 235a toward the left shown in the Figs.. Because the larger diameter end of the variable flow control part 235a is provided with the passageway substantially larger than the small passage 2351, when the variable flow control parts 235a is moved to the left, most fluid enters the upper valve chambers 2313a along the passageway provided at the larger diameter end, and then enters the second connecting tube 212 via the fluid passage 212a. Due to the fact that the first connecting tube 213 and the upper chamber 217 are communicated through the small passage 2352, and the second connecting tube 212 and the upper chamber 217 are communicated through a lager passage (i.e., the passage provided at the larger diameter end of the variable flow control part 235a), the pressure of the upper chamber 217 is decreased to be lower than the pressure at the lower portion of the piston part 22. Therefore, under the action of this pressure difference, the piston part 22 is moved upward and thus the valve port 214 is opened.

### (III) close from B to A

The coil part 1 is not energized, and the movable core 232 is moved downward to a limit position under the action of the movable core spring 238. Sealing surfaces of the sealing plugs 234a/234b is respectively pressed against the openings of the fluid passages 2314/2315 at both sides under the action of the spring 233, and thus the fluid passages 2314/2315 are closed. At this time, high pressure fluid is introduced from the second connecting tube 212, enters the upper valve chamber 2313a through the fluid passage 212a, and then flows into the fluid passage 2314 via the small passage 2351 at the center of the variable flow control part 235a and pushes the sealing plug 234a to compress the spring 233 and thus to move toward right. Therefore, the high pressure fluid flows into the upper chamber 217 through a gap between the inner chamber of the upper valve seat 2310 and the smaller diameter section of the movable core 232. At this time, the chamber above the piston part 22 is in a high pressure, and the chamber therebelow (i.e., the end of the first connecting tube 212) is in a low pressure. Thus, the valve port 214 is closed under the action of the pressure difference, the two-way solenoid valve is then in a closed state.

### (IV) open valve from B to A in a closed state

The coil part 1 is energized, and the movable core 232 is moved upward and is attracted to the static core 239 by electromagnetic force. The sealing plugs 234a/234b are moved upward with the movable core 232, and thus the fluid passages 2314/2315 are opened. High pressure fluid is introduced from the second connecting tube 212, enters the upper valve chamber 2313a through the fluid passage 212a, and then flows into the fluid passage 2314 via the small passage 2351 at the center of the variable flow control part 235a. At this time, due to the fact that the sealing plugs 234a/234b is moved upward with the movable core 232, the fluid enters the upper chamber 217 directly and then enters the fluid passage 2315. A small part of the high pressure fluid enters the upper valve chamber 2313b through the small passage 2352 at the center of the variable flow control part 235b, but most of the high pressure fluid pushes the variable flow control part 235b toward the right shown in Fig. 4. Because the larger diameter end of the variable flow control part 235b is provided with the passageway substantially larger than the small passage 2352, when the variable flow control parts 235b is moved to the right, most fluid enters the upper valve chambers 2313b along the passageway provided at the larger diameter end, and then enters the first connecting tube 213 via the fluid passage 213a. Due to the fact that the second connecting tube 212 and the upper chamber 217 are communicated through the small passage 2351, and the first connecting tube 213 and the upper chamber 217 are communicated through a lager passage (i.e., the passage provided at the larger diameter end of the variable flow control part 235b), the pressure of the upper chamber 217 is decreased to be lower than the pressure at the lower portion of the piston part 22. Therefore, under the action of this pressure difference, the piston part 22 is moved upward and thus the valve port 214 is opened.

The description above only refers to preferable embodiments exemplified for better illustrating the technical solution of this invention. It should be noted that for persons skilled in the art, many improvements and modifications may also be made to the present invention without departing from the principle of the present invention, which improvements and modifications also fall within the scope of protection of the present invention.

## Claims

1. A two-way solenoid valve, comprising a valve body part (2) and a coil (1) provided outside the valve body part (2), wherein the valve body part (2) comprises an upper valve body part (23) and a lower valve body part (21), the upper valve body part (23) acts as a valve guiding part in the two-way solenoid valve, the upper valve body part (23) comprises an upper valve body member, a sleeve (2312), a movable core (232) and a static core (239) which are arranged within the sleeve (2312), and a return spring (238) which is provided between the movable core (232) and the static core (239), the upper valve body member comprises an upper valve seat (2310) and a valve seat boss (2311), and has a hollow structure which defines an inner chamber having at least a pair of planes parallel to each other, a pair of upper valve seat chambers (2313a, 2313b) is provided symmetrically inside the upper valve seat (2310), and fluid passages (2314, 2315) between the inner chamber and the upper valve seat chambers (2313a, 2313b) are opened at the planes,
**characterized in that** the upper valve body part (23) and the lower valve body part (21) are hermetically fixed to each other, variable flow control parts (235a, 235b) are provided within the upper valve seat chambers (2313a, 2313b), and the variable flow control parts (235a, 235b) adapts to block the fluid passages (2314, 2315) under the action of springs (236a, 236b) arranged within the upper valve seat chambers (2313a. 2313b).

2. The two-way solenoid valve according to claim 1, wherein the variable flow control part (235a, 235b) is further provided with a flow path (2351, 2352) having a smaller inner diameter, which allows a small part of fluid to enter the upper valve seat chamber (2313a, 2313b) along the flow path (2351, 2352) when the variable flow control part (235a, 235b) blocks the fluid passage (2314, 2315).

3. The two-way solenoid valve according to claim 1 or 2, wherein the lower valve body part (21) is provided with two openings leading to a chamber (215), and two connecting tubes (212, 213) are respectively connected to the openings, and wherein the openings are communicated with the pair of upper valve seat chambers (2313a. 2313b) within the valve guiding part respectively through a connecting passage (212a, 212b) provided within the lower valve body part (21).

4. The two-way solenoid valve according to claim 3, wherein an end of the movable core (232) which is farther from the static core (239) is provided with a radial hole, a pair of sealing plugs (234a, 234b) is provided symmetrically in the radial hole, and a spring (233) is provided between the sealing plugs (234a, 234b); and wherein the fluid passages (2314, 2315) are respectively blocked by the pair of sealing plugs (234a, 234b) when the movable core (232) is moved downward to a limit position.

5. The two-way solenoid valve according to claim 4, wherein the two-way solenoid valve further comprises a piston part (22) provided in the chamber (215) and having a hollow structure, and a spring (221) is provided within the piston part (22), with one end of the spring (221) abutting against an inner portion of the piston part (22) while the other end thereof abutting against an end surface of the upper valve body part (23).

6. The two-way solenoid valve according to claim 5, wherein the lower valve body part (21) comprises a valve seat (211), the valve seat (211) is provided with a valve port (214), a gasket (224) for sealing the valve port (214) is arranged at an end of the piston part (22).

7. A two-way solenoid valve, comprising a valve body part (2) and a coil (1) provided outside the valve body part (2), wherein the valve body part (2) comprises an upper valve body part (23) and a lower valve body part (21), the upper valve body part (23) acts as a valve guiding part in the two-way solenoid valve, the upper valve body part (23) comprises an upper valve body member, a sleeve (2312), a movable core (232) and a static core (239) which are arranged within the sleeve (2312), and a return spring (238) which is provided between the movable core (232) and the static core (239), the upper valve body member comprises an upper valve seat (2310) and a valve seat boss (2311), and has a hollow structure which defines an inner chamber having at least a pair of planes parallel to each other, a pair of upper valve seat chambers (2313a, 2313b) is provided symmetrically inside the upper valve seat (2310), and fluid passages (2314, 2315) between the inner chamber and the upper valve seat chambers (2313a, 2313b) are opened at the planes,
**characterized in that** the upper valve body part (23) and the lower valve body part (21) are connected through connecting tubes, and a variable flow control part (235a, 235b) is disposed within each of the connecting tubes.

8. The two-way solenoid valve according to claim 7, wherein the variable flow control part (235a, 235b) is further provided with a flow path (2351, 2352) having a smaller inner diameter, which allows a small part of fluid to enter the upper valve seat chamber (2313a, 2313b) along the flow path (2351, 2352) when the variable flow control part (235a, 235b) blocks the fluid passage (2314, 2315).

9. The two-way solenoid valve according to claim 7 or 8, wherein the lower valve body part (21) is provided with two openings leading to a chamber (215), and two connecting tubes (212, 213) are respectively connected to the openings, and wherein the openings are communicated with the pair of upper valve seat chambers (2313a. 2313b) within the valve guiding part respectively through a connecting passage (212a, 212b) provided within the lower valve body part (21).

10. The two-way solenoid valve according to claim 9, wherein an end of the movable core (232) which is farther from the static core (239) is provided with a radial hole, a pair of sealing plugs (234a, 234b) is provided symmetrically in the radial hole, and a spring (233) is provided between the sealing plugs (234a, 234b); and wherein the fluid passages (2314, 2315) are respectively blocked by the pair of sealing plugs (234a, 234b) when the movable core (232) is moved downward to a limit position.

11. The two-way solenoid valve according to claim 10, wherein the two-way solenoid valve further comprises a piston part (22) provided in the chamber (215) and having a hollow structure, and a spring (221) is provided within the piston part (22), with one end of the spring (221) abutting against an inner portion of the piston part (22) while the other end thereof abutting against an end surface of the upper valve body part (23).

12. The two-way solenoid valve according to claim 11, wherein the lower valve body part (21) comprises a valve seat (211), the valve seat (211) is provided with a valve port (214), a gasket (224) for sealing the valve port (214) is arranged at an end of the piston part (22).

## Patentansprüche

1. Zweiwege-Magnetventil, das ein Ventilgehäuseteil (2) und eine Spule (1), die außerhalb des Ventilgehäuseteils (2) bereitgestellt wird, umfasst, wobei das Ventilgehäuseteil (2) ein oberes Ventilgehäuseteil (23) und ein unteres Ventilgehäuseteil (21) umfasst, wobei das obere Ventilgehäuseteil (23) als ein Ventilführungsteil in dem Zweiwege-Magnetventil agiert, das obere Ventilgehäuseteil (23) ein oberes Ventilgehäuseelement, eine Hülse (2312), einen beweglichen Kern (232) und einen unbeweglichen Kern (239), die innerhalb der Hülse (2312) angeordnet sind, und eine Rückstellfeder (238), die zwischen dem beweglichen Kern (232) und dem unbeweglichen Kern (239) bereitgestellt wird, umfasst, das obere Ventilgehäuseelement einen oberen Ventilsitz (2310) und einem Ventilsitzvorsprung (2311) umfasst und eine hohle Struktur hat, die eine innere Kammer definiert, die wenigstens ein Paar von zueinander parallelen Ebenen hat, ein Paar von oberen Ventilsitzkammern (2313a, 2313b) symmetrisch innerhalb des oberen Ventilsitzes (2310) bereitgestellt wird und Fluiddurchgänge (2314, 2315) zwischen der inneren Kammer und den oberen Ventilsitzkammern (2313a, 2313b) bei den Ebenen geöffnet sind,
**dadurch gekennzeichnet, dass** das obere Ventilgehäuseteil (23) und das untere Ventilgehäuseteil (21) hermetisch aneinander befestigt sind, innerhalb der oberen Ventilsitzkammern (2313a, 2313b) veränderliche Durchflusssteuerteile (235a, 235b) bereitgestellt werden und die veränderlichen Durchflusssteuerteile (235a, 235b) dafür eingerichtet sind, die Fluiddurchgänge (2314, 2315) unter der Einwirkung von Federn (236a, 236b), die innerhalb der oberen Ventilsitzkammern (2313a, 2313b) angeordnet sind, zu sperren.

2. Zweiwege-Magnetventil nach Anspruch 1, wobei das veränderliche Durchflusssteuerteil (235a, 235b) ferner mit einer Durchflussbahn (2351, 2352) versehen ist, die einen kleineren Innendurchmesser hat, was es ermöglicht, dass ein kleiner Teil des Fluids entlang der Durchflussbahn (2351, 2352) in die oberen Ventilsitzkammern (2313a, 2313b) eintritt, wenn das veränderliche Durchflusssteuerteil (235a, 235b) den Fluiddurchgang (2314, 2315) sperrt.

3. Zweiwege-Magnetventil nach Anspruch 1 oder 2, wobei das untere Ventilgehäuseteil (21) mit zwei Öffnungen versehen ist, die zu einer Kammer (215) führen, und zwei Verbindungsröhren (212, 213) jeweils mit den Öffnungen verbunden sind und wobei die Öffnungen jeweils mit dem Paar von oberen Ventilsitzkammern (2313a, 2313b) innerhalb des Ventilführungsteils verbunden sind durch einen Verbindungsdurchgang (212a, 212b), der innerhalb des unteren Ventilgehäuseteils (21) bereitgestellt wird.

4. Zweiwege-Magnetventil nach Anspruch 3, wobei ein Ende des beweglichen Kerns (232), das von dem unbeweglichen Kern (239) entfernter ist, mit einem Radialloch versehen ist, ein Paar von Abdichtungsstopfen (234a, 234b) symmetrisch in dem Radialloch bereitgestellt wird und eine Feder (233) zwischen den Abdichtungsstopfen (234a, 234b) bereitgestellt wird und wobei die Fluiddurchgänge (2314, 2315) jeweils durch das Paar von Abdichtungsstopfen (234a, 234b) gesperrt werden, wenn der bewegliche Kern (232) nach unten zu einer Grenzstellung bewegt wird.

5. Zweiwege-Magnetventil nach Anspruch 4, wobei das Zweiwege-Magnetventil ferner ein Kolbenteil (22) umfasst, das in der Kammer (215) bereitgestellt wird und eine hohle Struktur hat, und eine Feder (221) innerhalb des Kolbenteils (22) bereitgestellt wird, wobei das eine Ende der Feder (221) an einen inneren Abschnitt des Kolbenteils (22) anstößt, während das andere Ende derselben an eine Stirnfläche des oberen Ventilgehäuseteils (23) anstößt.

6. Zweiwege-Magnetventil nach Anspruch 5, wobei das untere Ventilgehäuseteil (21) einen Ventilsitz (211) umfasst, der Ventilsitz (211) mit einer Ventilöffnung (214) versehen ist und eine Dichtung (224) zum Abdichten der Ventilöffnung (214) an einem Ende des Kolbenteils (22) angeordnet ist.

7. Zweiwege-Magnetventil, das ein Ventilgehäuseteil (2) und eine Spule (1), die außerhalb des Ventilgehäuseteils (2) bereitgestellt wird, umfasst, wobei das Ventilgehäuseteil (2) ein oberes Ventilgehäuseteil (23) und ein unteres Ventilgehäuseteil (21) umfasst, wobei das obere Ventilgehäuseteil (23) als ein Ventilführungsteil in dem Zweiwege-Magnetventil agiert, das obere Ventilgehäuseteil (23) ein oberes Ventilgehäuseelement, eine Hülse (2312), einen beweglichen Kern (232) und einen unbeweglichen Kern (239), die innerhalb der Hülse (2312) angeordnet sind, und eine Rückstellfeder (238), die zwischen dem beweglichen Kern (232) und dem unbeweglichen Kern (239) bereitgestellt wird, umfasst, das obere Ventilgehäuseelement einen oberen Ventilsitz (2310) und einem Ventilsitzvorsprung (2311) umfasst und eine hohle Struktur hat, die eine innere Kammer definiert, die wenigstens ein Paar von zueinander parallelen Ebenen hat, ein Paar von oberen Ventilsitzkammern (2313a, 2313b) symmetrisch innerhalb des oberen Ventilsitzes (2310) bereitgestellt wird und Fluiddurchgänge (2314, 2315) zwischen der inneren Kammer und den oberen Ventilsitzkammern (2313a, 2313b) bei den Ebenen geöffnet sind,
**dadurch gekennzeichnet, dass** das obere Ventilgehäuseteil (23) und das untere Ventilgehäuseteil (21) durch Verbindungsröhren verbunden sind und ein veränderliches Durchflusssteuerteil (235a, 235b) innerhalb jeder der Verbindungsröhren angeordnet ist.

8. Zweiwege-Magnetventil nach Anspruch 7, wobei das veränderliche Durchflusssteuerteil (235a, 235b) ferner mit einer Durchflussbahn (2351, 2352) versehen ist, die einen kleineren Innendurchmesser hat, was es ermöglicht, dass ein kleiner Teil des Fluids entlang der Durchflussbahn (2351, 2352) in die oberen Ventilsitzkammern (2313a, 2313b) eintritt, wenn das veränderliche Durchflussregelteile (235a, 235b) den Fluiddurchgang (2314, 2315) sperrt.

9. Zweiwege-Magnetventil nach Anspruch 7 oder 8, wobei das untere Ventilgehäuseteil (21) mit zwei Öffnungen versehen ist, die zu einer Kammer (215) führen, und zwei Verbindungsröhren (212, 213) jeweils mit den Öffnungen verbunden sind und wobei die Öffnungen jeweils mit dem Paar von oberen Ventilsitzkammern (2313a, 2313b) innerhalb des Ventilführungsteils verbunden sind durch einen Verbindungsdurchgang (212a, 212b), der innerhalb des unteren Ventilgehäuseteils (21) bereitgestellt wird.

10. Zweiwege-Magnetventil nach Anspruch 9, wobei ein Ende des beweglichen Kerns (232), das von dem unbeweglichen Kern (239) entfernter ist, mit einem Radialloch versehen ist, ein Paar von Abdichtungsstopfen (234a, 234b) symmetrisch in dem Radialloch bereitgestellt wird und eine Feder (233) zwischen den Abdichtungsstopfen (234a, 234b) bereitgestellt wird und wobei die Fluiddurchgänge (2314, 2315) jeweils durch das Paar von Abdichtungsstopfen (234a, 234b) gesperrt werden, wenn der bewegliche Kern (232) nach unten zu einer Grenzstellung bewegt wird.

11. Zweiwege-Magnetventil nach Anspruch 10, wobei das Zweiwege-Magnetventil ferner ein Kolbenteil (22) umfasst, das in der Kammer (215) bereitgestellt wird und eine hohle Struktur hat, und eine Feder (221) innerhalb des Kolbenteils (22) bereitgestellt wird, wobei das eine Ende der Feder (221) an einen inneren Abschnitt des Kolbenteils (22) anstößt, während das andere Ende derselben an eine Stirnfläche des oberen Ventilgehäuseteils (23) anstößt.

12. Zweiwege-Magnetventil nach Anspruch 11, wobei das untere Ventilgehäuseteil (21) einen Ventilsitz (211) umfasst, der Ventilsitz (211) mit einer Ventilöffnung (214) versehen ist und eine Dichtung (224) zum Abdichten der Ventilöffnung (214) an einem Ende des Kolbenteils (22) angeordnet ist.

## Revendications

1. Electrovanne à deux voies, comprenant une partie de corps de soupape (2) et une bobine (1) agencée à l'extérieur de la partie de corps de soupape (2), dans laquelle la partie de corps de soupape (2) comprend une partie de corps de soupape supérieure (23) et une partie de corps de soupape inférieure (21), la partie de corps de soupape supérieure (23) agit en tant que partie de guidage de soupape dans l'électrovanne à deux voies, la partie de corps de soupape supérieure (23) comprend un élément de corps de soupape supérieure, un manchon (2312), un noyau mobile (232) et un noyau fixe (239) lesquels sont agencés dans le manchon (2312), et un ressort de rappel (238) lequel est agencé entre le noyau mobile (232) et le noyau fixe (239), l'élément de corps de soupape supérieure comprend un siège de soupape supérieure (2310) et un bossage de siège de soupape (2311), et dispose d'une structure creuse laquelle définit une chambre intérieure ayant au moins une paire de plans mutuellement parallèles, une paire de chambres de siège de soupape supérieure (2313a, 2313b) est agencée symétriquement à l'intérieur du siège de soupape supérieure (2310), et des passages de fluide (2314, 2315) entre la chambre intérieure et les chambres de siège de soupape supérieure (2313a, 2313b) sont ouverts au niveau des plans,
**caractérisée en ce que** la partie de corps de soupape supérieure (23) et la partie de corps de soupape inférieure (21) sont hermétiquement fixées l'une à l'autre, des parties de commande d'écoulement variable (235a, 235b) sont agencées dans les chambres de siège de soupape supérieure (2313a, 2313b), et les parties de commande d'écoulement variable (235a, 235b) s'adaptent pour bloquer les passages de fluide (2314, 2315) sous l'action de ressorts (236a, 236b) agencés dans les chambres de siège de soupape supérieure (2313a, 2313b).

2. Électrovanne à deux voies selon la revendication 1, dans laquelle la partie de commande d'écoulement variable (235a, 235b) est en outre munie d'un trajet d'écoulement (2351, 2352) ayant un diamètre intérieur plus petit, ce qui permet à une petite partie du fluide de pénétrer dans la chambre de siège de soupape supérieure (2313a, 2313b) le long du trajet d'écoulement (2351, 2352) lorsque la partie de commande d'écoulement variable (235a, 235b) bloque le passage de fluide (2314, 2315).

3. Électrovanne à deux voies selon la revendication 1 ou 2, dans laquelle la partie de corps de soupape inférieure (21) est munie de deux ouvertures conduisant à une chambre (215), et deux tubes de raccordement (212, 213) sont respectivement raccordés aux ouvertures, et dans laquelle les ouvertures communiquent avec la paire de chambres de siège de soupape supérieure (2313a, 2313b) dans la partie de guidage de soupape respectivement à travers un passage de raccordement (212a, 212b) agencé dans la partie de corps de soupape inférieure (21).

4. Électrovanne à deux voies selon la revendication 3, dans laquelle une extrémité du noyau mobile (232) qui est la plus éloignée du noyau fixe (239) est munie d'un trou radial, une paire de bouchons d'étanchéité (234a, 234b) est agencée symétriquement dans le trou radial, et un ressort (233) est agencé entre les bouchons d'étanchéité (234a, 234b), et dans laquelle les passages de fluide (2314, 2315) sont respectivement bloqués par la paire de bouchons d'étanchéité (234a, 234b) lorsque le noyau mobile (232) est déplacé vers le bas jusqu'à une position limite.

5. Électrovanne à deux voies selon la revendication 4, dans laquelle l'électrovanne à deux voies comprend en outre une partie de piston (22) agencée dans la chambre (215) et ayant une structure creuse, et un ressort (221) est prévu à l'intérieur de la partie de piston (22), avec une extrémité du ressort (221) venant en butée contre une partie intérieure de la partie de piston (22) alors que l'autre extrémité de celui-ci vient en butée contre une surface d'extrémité de la partie de corps de soupape supérieure (23).

6. Electrovanne à deux voies selon la revendication 5, dans laquelle la partie du corps de soupape inférieure (21) comprend un siège de soupape (211), le siège de soupape (211) est muni d'un orifice de soupape (214), un joint d'étanchéité (224) pour sceller l'orifice de soupape (214) est disposé à une extrémité de la partie de piston (22).

7. Électrovanne à deux voies, comprenant une partie de corps de soupape (2) et une bobine (1) agencée à l'extérieur de la partie de corps de soupape (2), dans laquelle la partie de corps de soupape (2) comprend une partie de corps de soupape supérieure (23) et une partie de corps de soupape inférieure (21), la partie de corps de soupape supérieure (23) agit en tant que partie de guidage de soupape dans l'électrovanne à deux voies, la partie de corps de soupape supérieure (23) comprend un élément de corps de soupape supérieure, un manchon (2312), un noyau mobile (232) et un noyau fixe (239) lesquels sont agencés dans le manchon (2312), et un ressort de rappel (238) lequel est agencé entre le noyau mobile (232) et le noyau fixe (239), l'élément de corps de soupape supérieure comprend un siège de soupape supérieure (2310) et un bossage de siège de soupape (2311), et dispose d'une structure creuse laquelle définit une chambre intérieure ayant au moins une paire de plans mutuellement parallèles, une paire de chambres de siège de soupape supérieure (2313a, 2313b) est agencée symétriquement à l'intérieur du siège de soupape supérieure (2310), et des passages de fluide (2314, 2315) entre la chambre intérieure et les chambres de siège de soupape supérieure (2313a, 2313b) sont ouverts au niveau des plans,
**caractérisée en ce que** la partie de corps de soupape supérieure (23) et la partie de corps de soupape inférieure (21) sont raccordées via des tubes de raccordement, et une partie de commande d'écoulement variable (235a, 235b) est disposée à l'intérieur de chacun des tubes de raccordement.

8. Électrovanne à deux voies selon la revendication 7, dans laquelle la partie de commande d'écoulement variable (235a, 235b) est en outre munie d'un trajet d'écoulement (2351, 2352) ayant un diamètre intérieur plus petit, ce qui permet à une petite partie du fluide de pénétrer dans la chambre de siège de soupape supérieure (2313a, 2313b) le long du trajet d'écoulement (2351, 2352) lorsque la partie de commande d'écoulement variable (235a, 235b) bloque le passage de fluide (2314, 2315).

9. Électrovanne à deux voies selon la revendication 7 ou 8, dans laquelle la partie de corps de soupape inférieure (21) est munie de deux ouvertures conduisant à une chambre (215), et deux tubes de raccordement (212, 213) sont respectivement raccordés aux ouvertures, et dans laquelle les ouvertures communiquent avec la paire de chambres de siège de soupape supérieure (2313a, 2313b) dans la partie de guidage de soupape respectivement à travers un passage de raccordement (212a, 212b) agencé dans la partie de corps de soupape inférieure (21).

10. Électrovanne à deux voies selon la revendication 9, dans laquelle une extrémité du noyau mobile (232) qui est la plus éloignée du noyau fixe (239) est munie d'un trou radial, une paire de bouchons d'étanchéité (234a, 234b) est agencée symétriquement dans le trou radial, et un ressort (233) est agencé entre les bouchons d'étanchéité (234a, 234b), et dans laquelle les passages de fluide (2314, 2315) sont respectivement bloqués par la paire de bouchons d'étanchéité (234a, 234b) lorsque le noyau mobile (232) est déplacé vers le bas jusqu'à une position limite.

11. Électrovanne à deux voies selon la revendication 10, dans laquelle l'électrovanne à deux voies comprend en outre une partie de piston (22) agencée dans la chambre (215) et ayant une structure creuse, et un ressort (221) est prévu à l'intérieur de la partie de piston (22), avec une extrémité du ressort (221) venant en butée contre une partie intérieure de la partie de piston (22) alors que l'autre extrémité de celui-ci vient en butée contre une surface d'extrémité de la partie de corps de soupape supérieure (23).

12. Electrovanne à deux voies selon la revendication 11, dans laquelle la partie du corps de soupape inférieure (21) comprend un siège de soupape (211), le siège de soupape (211) est muni d'un orifice de soupape (214), un joint d'étanchéité (224) pour sceller l'orifice de soupape (214) est disposé à une extrémité de la partie de piston (22).
